(19)

Europäisches
Patentamt
European
Patent Office
Office européen
des brevets

(11) **EP 4 365 218 A1**

(12) **EUROPEAN PATENT APPLICATION**
published in accordance with Art. 153(4) EPC

(43) Date of publication:
**08.05.2024 Bulletin 2024/19**

(21) Application number: **22833405.8**

(22) Date of filing: **24.05.2022**

(51) International Patent Classification (IPC):
**C08G 63/60** $^{(2006.01)}$     **C08J 5/18** $^{(2006.01)}$

(52) Cooperative Patent Classification (CPC):
**C08G 63/60; C08J 5/18;** Y02W 30/62

(86) International application number:
**PCT/KR2022/007322**

(87) International publication number:
**WO 2023/277349 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021 KR 20210085989**

(71) Applicant: **SK Chemicals Co., Ltd.
Seongnam-si, Gyeonggi-do 13494 (KR)**

(72) Inventors:
• **HWANG, Da-Young
Seongnam-si, Gyeonggi-do 13494 (KR)**
• **KIM, Sangwoo
Seongnam-si, Gyeonggi-do 13494 (KR)**
• **KIM, Ha-Neul
Seongnam-si, Gyeonggi-do 13494 (KR)**
• **LEE, Boo-Youn
Seongnam-si, Gyeonggi-do 13494 (KR)**

(74) Representative: **Berggren Oy
P.O. Box 16
Eteläinen Rautatiekatu 10A
00101 Helsinki (FI)**

(54) **POLYESTER COPOLYMER COMPRISING RECYCLED MONOMER**

(57)     This invention relates to polyester copolymer comprising recycled monomers, a method for preparing the same, and an article comprising the same, and this invention uses recycled monomers but can provide polyester copolymer having excellent properties, and particularly, can provide polyester copolymer having excellent color property and transparency.

**EP 4 365 218 A1**

**Description**

**[TECHNICAL FIELD]**

This invention relates to polyester copolymer comprising recycled monomers, a method for preparing the same, and an article comprising the same,

**[BACKGROUND ART]**

Polyester has excellent mechanical strength, heat resistance, transparency and gas barrier property, and thus, is most suitable as material of beverage containers, packaging films, audio/video films, and the like, and is being used in large quantities. Further, it is being widely produced worldwide as industrial material such as medical fiber or tire cord, and the like. Since a polyester sheet or plate has good transparency and excellent mechanical strength, it is being widely used as materials of cases, boxes, store shelves, protection panels, blister packaging, building materials, interior and exterior materials, and the like.

Meanwhile, as waste plastic responsible for about 70% of marine pollution has become a serious social problem, every country regulates the use of disposable plastic, and simultaneously, plans to reuse waste plastic. A method for reusing waste plastic may be largely classified in two methods, one collects, grinds and cleans waste plastic, followed by melt extrusion and re-pelletization, and uses it as raw material, and the other uses material obtained by depolymerization of waste plastic as monomers for synthesis of plastic. In the latter case, bis-2-hydroxyethyl terephthalate may be obtained by depolymerization of PET or PETG among waste plastic, and using the same as monomers of polyester copolymer is being studied.

However, due to foreign substances in waste plastic, it is difficult to obtain satisfactory material, and particularly, plastic prepared from material obtained by depolymerization of waste plastic often generates quality deterioration.

Thus, the inventors confirmed that the qualities of polyester copolymer prepared from materials obtained by depolymerization of waste plastic can be improved by using recycled bis-2-hydroxyethyl terephthalate as monomers of polyester copolymer, but controlling the amounts of other monomers used as described later, and completed the invention.

**[DETAILED DESCRIPTION OF THE INVENTION]**

**[Technical Problem]**

It is an object of the invention to provide polyester copolymer comprising recycled monomers, a method for preparing the same, and an article comprising the same,

**[Technical Solution]**

In order to achieve the object, there is provided polyester copolymer polymerized from

1) recycled bis-2-hydroxyethyl terephthalate,
2) acid comprising dicarboxylic acid or derivatives thereof, and
3) diol comprising diethylene glycol and comonomers, and

having a structure in which a part derived from the bis-2-hydroxyethyl terephthalate, a part derived from the dicarboxylic acid or derivatives thereof, and a part derived from the diol are repeated,
wherein the polyester copolymer comprises the part derived from the recycled bis-2-hydroxyethyl terephthalate in the content of 5 to 70 wt%, and
the mole ratio of the diol and the dicarboxylic acid or derivatives thereof is 1.0:1 to 2.5:1.

**Definition of terms**

The copolymer according to the invention relates to a copolymer prepared by copolymerization of dicarboxylic acid or derivatives thereof, and diol comprising diethylene glycol and comonomers, wherein recycled bis-2-hydroxyethyl terephthalate participates in the reaction during the copolymerization process.

The term 'derive' means a certain part or unit derived from a specific compound included in the product of a chemical reaction, when the specific compound participates in the chemical reaction. Specifically, an acid part derived from dicarboxylic acid or derivatives thereof, and a diol part derived from diol respectively mean a repeat unit in polyester copolymer formed by an esterification reaction or a condensation polymerization reaction. Further, a part derived from bis-2-hydroxyethyl terephthalate means a repeat unit in polyester copolymer formed by an esterification reaction in the copolymerization reaction.

**Acid comprising dicarboxylic acid or derivatives thereof**

Dicarboxylic acid or a derivative thereof used herein means main monomers constituting polyester copolymer together with diol components. Particularly, the dicarboxylic acid comprises terephthalic acid, and by the terephthalic acid, the properties of the polyester copolymer according to the invention may be improved. Further, the terephthalic acid residue may be also formed from alkyl ester of terephthalic acid, preferably dimethylterephthalic acid.

The dicarboxylic acid components may further comprise an aromatic dicarboxylic acid component, an aliphatic dicarboxylic acid component, or a mixture thereof, besides terephthalic acid. In this case, it is preferable that dicarboxylic acid components other than terephthalic acid may be included in the content of 1 to 30wt%, based on the total weight of the total dicarboxylic acid components.

The aromatic dicarboxylic acid component may be C8-20, preferably C8-14 aromatic dicarboxylic acid or a mixture thereof. Examples of the aromatic dicarboxylic acid may include isophthalic acid, naphthalenedicarboxylic acid such as 2,6-naphthalenedicarboxylic acid, and the like, diphenyl dicarboxylic acid, 4,4'-stilbenedicarboxylic acid, 2,5-furandicarboxylic acid, 2,5-thiophenedicarboxylic acid, and the like, but specific examples of the aromatic dicarboxylic acid are not limited thereto. The aliphatic dicarboxylic acid component may be a C4-20, preferably C4-12 aliphatic dicarboxylic acid component or a mixture thereof. Examples of the aliphatic dicarboxylic acid may include cyclohexanedicarboxylic acid such as 1,4-cyclohexanedicarboxylic acid, 1,3-cyclohexanedicarboxylic acid, and the like, linear, branched or cyclic aliphatic dicarboxylic acid components such as phthalic acid, sebacic acid, succinic acid, isodecylsuccinic acid, maleic acid, fumaric acid, adipic acid, glutaric acid and azelaic acid, and the like, but specific examples of the aliphatic dicarboxylic acid are not limited thereto.

Specifically, the acid comprising dicarboxylic acid or derivatives thereof may comprise one or more selected from the group consisting of isophthalic acid, dimethyl isophthalate, phthalic acid, dimethyl phthalate, phthalic anhydride, 2,6-naphthalene dicarboxylic acid, dimethyl 2,6-naphthalene dicarboxylate, diphenyl dicarboxylic acid, 1,4-cyclohexane dicarboxylic acid, 1,3-cyclohexane dicarboxylic acid, dimethyl 1,4-cyclohexane dicarboxylate, dimethyl 1,3-cyclohexane dicarboxylate, sebacic acid, succinic acid, isodecylsuccinic acid, maleic acid, maleic anhydride, fumaric acid, adipic acid, glutaric acid and azelaic acid, besides terephthalic acid.

**Diol**

The diol components used herein mean main monomers constituting polyester copolymer together with the above explained dicarboxylic acid or derivatives thereof. Particularly, the diol components comprise diethylene glycol and comonomers, and the comonomers are ethylene glycol, cyclohexanedimethanol, cyclohexanedimethanol derivatives, or a combination thereof. Preferably, the cyclohexanedimethanol derivative is 4-(hydroxymethyl)cyclohexylmethyl 4-(hydroxymethyl)cyclohexane carboxylate, or 4-(4-(hydroxymethyl)cyclohexylmethoxymethyl)cyclohexylmethanol. Preferably, in case the polyester resin according to the invention comprises cyclohexanedimethanol derivatives, it may comprise a diol part derived from 4-(hydroxymethyl)cyclohexylmethyl 4-(hydroxymethyl)cyclohexane carboxylate and 4-(4-(hydroxymethyl)cyclohexylmethoxymethyl)cyclohexylmethanol in the content of 0.1 to 25 mol%, based on the total diol part.

Further, preferably, as the comonomers, 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol or a mixture thereof may be additionally included.

The diethylene glycol is a component contributing to improvement in the color property of polyester copolymer. Preferably, the diethylene glycol residues may be included in the content of 5 to 50 moles, based on 100 moles of the total diol component residues. More preferably, the diethylene glycol residues may be included in the content of 6 moles or more, 7 moles or more, or 8 moles or more, and 45 moles or less, 40 moles or less, 35 moles or less, 30 moles or less, 25 moles or less, or 20 moles or less, based on 100 moles of the total diol component residues.

The ethylene glycol is a component contributing to improvement in the transparency and impact resistance of polyester copolymer. Preferably, the ethylene glycol residues are included in the content of 30 to 80 moles, based on 100 moles of the total diol component residues. More preferably, the ethylene glycol residues are included in the content of 35 moles or more, 40 moles or more, 45 moles or more, 50 moles or more, or 55 moles or more, and 75 moles or less, based on 100 moles of the total diol component residues.

The cyclohexanedimethanol (for example, 1,2-cyclohexanedimethanol, 1,3-cyclohexanedimethanol or 1,4-cyclohexanedimethanol) is a component contributing to improvement in the transparency and impact resistance of prepared polyester copolymer. Preferably, the cyclohexanedimethanol residues are included in the content of 5 to 40 moles, based on 100 moles of the total diol component residues. More preferably, the cyclohexanedimethanol residues are included in the content of 10 to 35 moles, based on 100 moles of the total diol component residues.

Meanwhile, it is preferable that in the diol components used for copolymerization of polyester copolymer according to the invention, the mole ratio of the diol, and the dicarboxylic acid or derivatives thereof is 1.0:1 to 2.5:1. Wherein, the 'mole ratio' means a mole ratio to the components introduced during copolymerization of polyester copolymer. If the mole ratio is less than 1.0 or greater than 2.5, the color property or transparency of polyester copolymer may be deteriorated.

**Recycled bis-2-hydroxyethyl terephthalate**

As used herein, the term 'recycled bis-2-hydroxyethyl terephthalate' means material obtained from waste plastic collected after use. As the waste plastic that can obtain the bis-2-hydroxyethyl terephthalate, PET and PETG, and the like may be mentioned. For example, bis-2-hydroxyethyl terephthalate can be obtained from PEG collected after use, by glycolysis, hydrolysis, methanolysis, and the like, and such methods are widely known in the art.

Since the recycled bis-2-hydroxyethyl terephthalate passes many chemical steps during the process of obtaining it from waste plastic, in case it is used as monomers of copolymer, product qualities may be inevitably deteriorated. Particularly, in case it is used as monomers of polyester copolymer, color quality may be deteriorated, and by-products may be generated in large quantities as described later.

Thus, this invention uses the recycled bis-2-hydroxyethyl terephthalate as the main monomers constituting the polyester copolymer according to the invention, but controls such that the polyester copolymer comprises the recycled bis-2-hydroxyethyl terephthalate residues in the content of 5 to 70wt%. If the content of the recycled bis-2-hydroxyethyl terephthalate is less than 5 wt%, the content of the above-explained diol may relatively increase, and thus, by-products derived from diol components, particularly by-products derived from ethylene glycol may increase, thus causing quality deterioration of polyester copolymer. Further, if the content of the recycled bis-2-hydroxyethyl terephthalate is greater than 70 wt%, color property and transparency of polyester copolymer may be deteriorated.

Preferably, the recycled bis-2-hydroxyethyl terephthalate has a purity of 85% or more. Since the recycled bis-2-hydroxyethyl terephthalate is obtained from waste plastic collected after use, impurities may be included, and if the content of such impurities increases, impurities may also be partly included in prepared polyester copolymer, thus causing deterioration of properties such as color, Haze, and the like. Particularly, if the purity of the recycled bis-2-hydroxyethyl terephthalate is low, it may be difficult to achieve desired shrinkage of a heat shrink film, and thus, it is preferable that the purity of the recycled bis-2-hydroxyethyl terephthalate is high.

More preferably, the purity of the recycled bis-2-hydroxyethyl terephthalate is 86% or more, 87% or more, 88% or more, 89% or more, 90% or more, 91% or more, 92% or more, 93% or more, 94% or more, or 95% or more. Meanwhile, the upper limit of the purity of the recycled bis-2-hydroxyethyl terephthalate is theoretically 100%, but for example, it may be 99% or less, 98% or less, or 97% or less. Meanwhile, the purify of the recycled bis-2-hydroxyethyl terephthalate may be measured by liquid chromatography, and the like, and specific measurement method of the purify will be specified in Examples later.

**Polyester copolymer**

The polyester copolymer according to the invention may be prepared by copolymerizing recycled bis-2-hydroxyethyl terephthalate, dicarboxylic acid or derivatives thereof, and ethylene glycol and comonomers as explained above. Wherein, the copolymerization may comprise sequentially conducting an esterification reaction (step 1) and a condensation polymerization reaction (step 2).

The esterification reaction is conducted in the presence of an esterification reaction catalyst, and esterification reaction catalysts comprising zinc-based compounds may be used. As specific examples of such zinc-based catalyst, zinc acetate, zinc acetate dihydrate, zinc chloride, zinc sulfate, zinc sulfide, zinc carbonate, zinc citrate, zinc gluconate, or a mixture thereof may be mentioned. Further, the amount of each starting material used is as explained above.

The esterification reaction may be conducted at a pressure of 0 to 10.0 kg/cm$^2$ and a temperature of 150 to 300°C. The esterification reaction conditions may be appropriately controlled according to specific properties of prepared polyester, component ratio, or process conditions, and the like. Specifically, preferable examples of the esterification reaction conditions may include a pressure of 0 to 5.0kg/cm$^2$, more preferably 0.1 to 3.0 kg/cm$^2$; a temperature of 200 to 270°C, more preferably 240 to 260°C.

Further, the esterification reaction may be conducted batch wise or continuously, and the raw materials may be separately introduced, but it is preferable to introduce in the form of slurry in which dicarboxylic acid components and recycled bis-2-hydroxyethyl terephthalate are mixed with diol components. Further, a diol component such as isosorbide that is solid at room temperature may be dissolved in water or ethylene glycol, and then, mixed with dicarboxylic acid components such as terephthalic acid to form a slurry. Alternatively, after isosorbide is molten at 60°C or more, it may be mixed with dicarboxylic acid components such as terephthalic acid and other diol components to form a slurry. Further, water may be additionally introduced in the mixed slurry to assist in increase in the flowability of the slurry.

The condensation polymerization reaction may be conducted by reacting the esterification reaction product at a temperature of 150 to 300°C and a reduced pressure of 600 to 0.01 mmHg for 1 to 24 hours.

Such a condensation polymerization reaction may be conducted at a reaction temperature of 150 to 300°C, preferably 200 to 290°C, more preferably 260 to 280°C; and a reduced pressure of 600 to 0.01 mmHg, preferably 200 to 0.05 mmHg, more preferably 100 to 0.1 mmHg. By applying reduced pressure condition to the condensation polymerization reaction, glycol, the by-product of the condensation polymerization, may be removed outside, and thus, if the reduced pressure condition of the condensation polymerization reaction does not fall within 400 to 0.01 mmHg, removal of by-products may be insufficient. Further, in case the condensation polymerization reaction is conducted outside a temperature range of 150 to 300°C, if the condensation polymerization reaction is progressed at 150°C or less, glycol, the by-products of the condensation polymerization reaction, may not be effectively removed outside, and thus, intrinsic viscosity of the final reaction product may be low, and the properties of prepared resin may be deteriorated, and if the reaction is progressed at 300°C or more, prepared polyester resin may be yellowed. Further, the condensation polymerization reaction may be progressed for a time until the intrinsic viscosity of the final reaction product reaches an appropriate level, for example, for an average residence time of 1 to 24 hours.

Further, the condensation polymerization reaction may use a condensation polymerization catalyst comprising a titanium-based compound, a germanium-based compound, an antimony-based compound, an aluminumbased compound, a tin-based compound, or a mixture thereof.

As examples of the titanium-based compound, tetraethyl titanate, acetyltripropyl titanate, tetrapropyl titanate, tetrabutyl titanate, 2-ethylhexyl titanate, octylene glycol titanate, lactate titanate, triethanolamine titanate, acetylacetonate titanate, ethylacetoaceticester titanate, isostearyl titanate, titanium dioxide, and the like may be mentioned. As examples of the germanium-based compound, germanium dioxide, germanium tetrachloride, germanium ethylene glycoxide, germanium acetate, a copolymer using them, or a mixture thereof, and the like may be mentioned. Preferably, germanium dioxide may be used, and as such germanium dioxide, both crystalline or amorphous germanium dioxide may be used, and glycol-soluble germanium dioxide may also be used.

Meanwhile, the polyester copolymer according to the invention has intrinsic viscosity of 0.50 to 1.0 dl/g, preferably 0.50 to 0.85 dl/g, more preferably 0.55 to 0.80 dl/g. The measurement method of intrinsic viscosity will be specified in Examples later.

Further, preferably, the polyester copolymer according to the invention has a Haze of 3 or less, more preferably, 2.5 or less, 2.0 or less, 1.5 or less, or 1.0 or less. Further, the lower limit of the Haze is theoretically 0, and in this invention, it may be 0.1 or more, 0.2 or more, 0.3 or more, 0.4 or more, or 0.5 or more. The measurement method of Haze will be specified in Examples later.

Further, preferably, for a 6 mm specimen of the polyester copolymer according to the invention, '(Hunter L value)-(Hunter b value)'(hereinafter, referred to as Plaque Color L-b) is 80 or more, more preferably, 81 or more, 82 or more, 83 or more, 84 or more, 85 or more, 86 or more, 87 or more, 88 or more, 89 or more, or 90 or more. Further, the upper limit of the Plaque Color L-b may be 100, and in this invention, it may be 99 or less, 98 or less, 97 or less, 96 or less, or 95 or less. The measurement method of Plaque Color L-b will be specified in Examples later.

According to the invention, there is also provided an article comprising the polyester copolymer.

The polyester copolymer prepared by the above-explained method may not only be in the state of a chip, pellet or powder before molding, but also be in the form of a molded article formed by a separate molding process such as extrusion or injection, and the like, for example, a film such as a heat shrink film or a sheet. The molded product according to another aspect of the invention may comprise the above-explained polyester copolymer, and the molded product may be a heat shrink film. Such a heat shrink film exhibits maximum heat shrinkage at 70°C of 45% or less, and maximum heat shrinkage at 95°C of 70% or more, and thus, it comprises recycled monomers but may exhibit heat shrinkability equivalent to previously known films obtained from polyester resin, and the like. The measurement method of 70°C shrinkage and 95°C shrinkage will be specified in Examples later.

[Advantageous Effects]

The above-explained polyester copolymer according to the invention can be extrusion molded, and thus, can be applied for the preparation of various containers.

[DETAILED DESCRIPTION OF THE EMBODIMENTS]

Hereinafter, preferable examples will be presented for better understanding of the invention. However, these examples are presented only for better understanding of the invention, and the scope of the invention is not limited thereby.

**Example 1**

In a reactor with a capacity of 10 L connected to a column, and a condenser that can be cooled by water, recycled bis-2-hydroxyethyl terephthalate having a purity of 93% (1485.3 g; hereinafter referred to as 'r-BHET'), TPA (terephthalic acid; 2034.6 g), EG (ethylene glycol; 367.0 g), CHDM (1,4-cyclohexanedimethanol; 826.4 g), and DEG (diethylene glycol; 211.1 g) were introduced, and $TiO_2$ (1.0 g) was introduced as a catalyst, phosphoric acid (1.5 g) as a stabilizer, Polysynthren Blue RLS (Clarient Inc., 0.006 g) as blue toner, and Solvaperm Red BB (Clarient Inc., 0.004 g) as red toner.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C, an esterification reaction was progressed. During this process, by-produces were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 285°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Example 2**

In a reactor with a capacity of 10 L connected to a column, and a condenser that can be cooled by water, r-BHET having a purity of 98% (2298.7 g), TPA (1119.5 g), EG (6.9 g), CHDM (721.0 g), DEG (217.6 g) were introduced, and $TiO_2$ (1.0 g) was introduced as a catalyst, phosphoric acid (1.5 g) as a stabilizer, and cobalt acetate (0.7 g) as a coloring agent.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C, an esterification reaction was progressed. During this process, by-produces were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 285°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Example 3**

In a reactor with a capacity of 10 L connected to a column, and a condenser that can be cooled by water, r-BHET having a purity of 90% (403.0 g), TPA (2370.1 g), EG (550.8 g), CHDM (685.3 g), and DEG (235.4 g) were introduced,

and TiO$_2$(1.0 g) was introduced as a catalyst, phosphoric acid(1.5 g) as a stabilizer, and cobalt acetate(0.7 g) as a coloring agent.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C , an esterification reaction was progressed. During this process, by-produces were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 285°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

## Example 4

In a reactor with a capacity of 10 L connected to a column, and a condenser that can be cooled by water, r-BHET having a purity of 85%(4128.2 g), TPA(674.5 g), CHDM(877.7 g), and DEG(387.6 g) were introduced, and TiO$_2$(1.0 g) was introduced as a catalyst, phosphoric acid(1.5 g) as a stabilizer, and cobalt acetate(1.0 g) as a coloring agent.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C , an esterification reaction was progressed. During this process, by-produces were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 285°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

## Example 5

In a reactor with a capacity of 10 L connected to a column, and a condenser that can be cooled by water, r-BHET having a purity of 99%(2515.0 g), TPA(1224.8 g), EG(79.3 g), CHDM(522.5 g), and DEG(311.4 g) were introduced, and TiO$_2$(1.0 g) was introduced as a catalyst, phosphoric acid(1.5 g) as a stabilizer, Polysynthren Blue RLS(Clarient Inc., 0.007 g) as blue toner, and Solvaperm Red BB(Clarient Inc., 0.004 g) as red toner.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C , an esterification reaction was progressed. During this process, by-produces were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 285°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Example 6**

In a reactor with a capacity of 10 L connected to a column, and a condenser that can be cooled by water, r-BHET having a purity of 98%(1424.4 g), TPA(2279.2 g), EG(695.4 g), CHDM(222.8 g), DEG(282.3 g), and CHDM derivatives (311.0 g; comprising i) 4-(hydroxymethyl)cyclohexylmethyl 4-(hydroxymethyl)cyclohexane carboxylate, and ii) 4-(4-(hydroxymethyl)cyclohexylmethoxymethyl)cyclohexylmethanol at the mole ratio of 1:3) were introduced, and $GeO_2$(1.0 g) was introduced as a catalyst, phosphoric acid(1.5 g) as a stabilizer, Polysynthren Blue RLS(Clarient In.c, 0.013 g) as blue toner, and Solvaperm Red BB(Clarient In.c, 0.004 g) as red toner.

Subsequently, nitrogen was introduced in the reactor to make a pressurized state where the pressure of the reactor is 1.0 kgf/cm$^2$ higher than atmospheric pressure (absolute pressure: 1495.6 mmHg). Further, the temperature of the reactor was raised to 220°C over 90 minutes, and maintained at 220°C for 2 hours, and then, raised to 265°C over 2 hours. And then, the mixture in the reactor was observed with the naked eye, and until the mixture became transparent, while maintaining the temperature of the reactor at 265°C, an esterification reaction was progressed. During this process, by-produces were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 275°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.65 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Example 7**

In a reactor with a capacity of 10 L connected to a column, and a condenser that can be cooled by water, r-BHET having a purity of 90%(3695.6 g), TPA(603.8 g), EG(157.9 g), CHDM(261.9 g), DEG(239.0 g), and CHDM derivatives(341.2 g; comprising i) 4-(hydroxymethyl)cyclohexylmethyl 4-(hydroxymethyl)cyclohexane carboxylate, and ii) 4-(4-(hydroxymethyl)cyclohexylmethoxymethyl)cyclohexylmethanol at the mole ratio of 6:1) were introduced, and $GeO_2$(1.0 g) was introduced as a catalyst, phosphoric acid(1.5 g) as a stabilizer, Polysynthren Blue RLS(Clarient Inc., 0.020 g) as blue toner, and Solvaperm Red BB(Clarient In.c, 0.008 g) as red toner.

Subsequently, nitrogen was introduced in the reactor to make a pressurized state where the pressure of the reactor is 0.5 kgf/cm$^2$ higher than atmospheric pressure (absolute pressure: 1127.8 mmHg). Further, the temperature of the reactor was raised to 220°C over 90 minutes, and maintained at 220°C for 2 hours, and then, raised to 260°C over 2 hours. And then, the mixture in the reactor was observed with the naked eye, and until the mixture became transparent, while maintaining the temperature of the reactor at 260°C, an esterification reaction was progressed. During this process, by-produces were discharged through the column and condenser. After the esterification reaction was completed, nitrogen inside the reactor of a pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 275°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.80 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Example 8**

In a reactor with a capacity of 10 L connected to a column, and a condenser that can be cooled by water, r-BHET having a purity of 86%(603.6 g), DMT(dimethyl terephthalate; 2612.2 g), EG(1070.6 g), CHDM(707.2 g), and DEG(231.3 g) were introduced, Mn(II) acetate tetrahydrate(1.5 g) and $Sb_2O_3$(1.8 g) were introduced as catalysts, and cobalt acetate(0.6 g) was introduced as a coloring agent.

Subsequently, nitrogen was introduced in the reactor such that the pressure of the reactor became atmospheric pressure. Further, Further, the temperature of the reactor was raised to 220°C over 90 minutes, and maintained at 220°C for 2 hours, and then, raised to 240°C over 2 hours. And then, the mixture in the reactor was observed with the naked eye, and until the mixture became transparent, while maintaining the temperature of the reactor at 240°C , an esterification reaction was progressed. During this process, by-produces were discharged through the column and condenser. After the esterification reaction was completed, nitrogen inside the reactor of pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 265°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Example 9**

In a reactor with a capacity of 10 L connected to a column, and a condenser that can be cooled by water, r-BHET having a purity of 87%(1245.6 g), TPA(1899.4 g), IPA(isophtalic acid; 814.0 g), EG(560.4 g), and CHDM(746.2 g), DEG(310.2 g) were introduced, and $GeO_2$(1.0 g) was introduced as a catalyst, and cobalt acetate(0.6 g) was introduced as a coloring agent.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C , an esterification reaction was progressed. During this process, by-produces were discharged through the column and condenser. After the esterification reaction was completed, nitrogen inside the reactor of pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 285°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Comparative Example 1**

In a reactor with a capacity of 10 L connected to a column, and a condenser that can be cooled by water, r-BHET having a purity of 81%(4368.6 g), TPA(150.3 g), EG(78.6 g), CHDM(834.3 g), and DEG(211.1 g) were introduced, and $TiO_2$(1.0 g) was introduced as a catalyst, phosphoric acid(1.5 g) as a stabilizer, and cobalt acetate(0.8 g) as a coloring agent.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C , an esterification reaction was progressed. During this process, by-produces were discharged through the column and condenser. After the esterification reaction was completed, nitrogen inside the reactor of pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 285°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Comparative Example 2**

In a reactor with a capacity of 10 L connected to a column, and a condenser that can be cooled by water, r-BHET having a purity of 90%(3732.6 g), TPA(183.6 g), CHDM(694.0 g), and DEG(226.1 g) were introduced, and $TiO_2$(1.0 g) was introduced as a catalyst, phosphoric acid(1.5 g) as a stabilizer, and cobalt acetate(0.7 g) as a coloring agent.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 255°C over 2 hours. And then, the mixture in the reactor was observed with the naked eye, and until the mixture became transparent, while maintaining the temperature of the reactor at 255°C , an esterification reaction was progressed. During this process, by-produces were discharged through the column and condenser. After the esterification reaction was completed, nitrogen inside the reactor of pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 285°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Comparative Example 3**

In a reactor with a capacity of 10 L connected to a column, and a condenser that can be cooled by water, r-BHET having a purity of 91%(1424.4 g), TPA(2279.2 g), EG(1798.4 g), CHDM(139.2 g), DEG(705.8 g), and CHDM derivatives (414.6 g; comprising i) 4-(hydroxymethyl)cyclohexylmethyl 4-(hydroxymethyl)cyclohexane carboxylate, and ii) 4-(4-(hydroxymethyl)cyclohexylmethoxymethyl)cyclohexylmethanol at the mole ratio of 5:1) were introduced, and $GeO_2$(1.0 g) was introduced as a catalyst, phosphoric acid(1.5 g) as a stabilizer, Polysynthren Blue RLS(Clarient Inc., 0.013 g) as blue toner, and Solvaperm Red BB(Clarient Inc., 0.004 g) as red toner.

Subsequently, nitrogen was introduced in the reactor to make a pressurized state where the pressure of the reactor is 1.0 $kgf/cm^2$ higher than atmospheric pressure (absolute pressure: 1495.6 mmHg). Further, the temperature of the reactor was raised to 220°C over 90 minutes, and maintained at 220°C for 2 hours, and then, raised to 265°C over 2 hours. And then, the mixture in the reactor was observed with the naked eye, and until the mixture became transparent, while maintaining the temperature of the reactor at 265°C , an esterification reaction was progressed. During this process, by-produces were discharged through the column and condenser. After the esterification reaction was completed, nitrogen inside the reactor of pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 275°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.65 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Comparative Example 4**

In a reactor with a capacity of 10 L connected to a column, and a condenser that can be cooled by water, r-BHET having a purity of 86%(2415.8 g), TPA(1578.8 g), EG(117.9 g), and CHDM(821.7 g) were introduced, and $GeO_2$(1.0 g) was introduced as a catalyst, phosphoric acid(1.5 g) as a stabilizer, and cobalt acetate(0.7 g) as a coloring agent.

Subsequently, nitrogen was introduced in the reactor to make a pressurized state where the pressure of the reactor is 2.0 $kgf/cm^2$ higher than atmospheric pressure (absolute pressure: 2231.1 mmHg). Further, the temperature of the reactor was raised to 220°C over 90 minutes, and maintained at 220°C for 2 hours, and then, raised to 265°C over 2 hours. And then, the mixture in the reactor was observed with the naked eye, and until the mixture became transparent, while maintaining the temperature of the reactor at 265°C , an esterification reaction was progressed. During this process, by-produces were discharged through the column and condenser. After the esterification reaction was completed, nitrogen inside the reactor of pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 270°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.60 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Comparative Example 5**

In a reactor with a capacity of 10 L connected to a column, and a condenser that can be cooled by water, r-BHET having a purity of 85%(1788.7 g), TPA(1169.0 g), EG(174.6 g), and DEG(411.3 g) were introduced, and $GeO_2$(1.0 g) was introduced as a catalyst, phosphoric acid(1.5 g) as a stabilizer, and cobalt acetate(0.1 g) as a coloring agent.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 265°C over 2 hours. And then, the mixture in the reactor was observed with the naked eye, and until the mixture became transparent, while maintaining the temperature of the reactor at 265°C , an esterification reaction was progressed. During this process, by-produces were discharged through the column and condenser. After the esterification reaction was completed, nitrogen inside the reactor of pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 280°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

**Comparative Example 6**

In a reactor with a capacity of 10 L connected to a column, and a condenser that can be cooled by water, r-BHET having a purity of 83%(2257.0 g), TPA(1475.4 g), EG(121.2 g), CHDM(742.3 g), and DEG(519.1 g) were introduced, and TiO$_2$(1.0 g) was introduced as a catalyst, phosphoric acid(1.5 g) as a stabilizer, and cobalt acetate(0.5 g) as a coloring agent.

Subsequently, nitrogen was introduced in the reactor to make a pressurized state where the pressure of the reactor is 2.0 kgf/cm$^2$ higher than atmospheric pressure (absolute pressure: 2231.1 mmHg). Further, the temperature of the reactor was raised to 220°C over 90 minutes, and maintained at 220°C for 2 hours, and then, raised to 270°C over 2 hours. And then, the mixture in the reactor was observed with the naked eye, and until the mixture became transparent, while maintaining the temperature of the reactor at 270°C , an esterification reaction was progressed. During this process, by-produces were discharged through the column and condenser. After the esterification reaction was completed, nitrogen inside the reactor of pressurized state was discharged outside to lower the pressure of the reactor to atmospheric pressure, and then, the mixture in the reactor was transferred to a reactor with a capacity of 7 L where a vacuum reaction can be progressed.

Further, the pressure of the reactor was lowered from atmospheric state to 5 Torr (absolute pressure: 5 mmHg) over 30 minutes, and simultaneously, the temperature of the reactor was raised to 280°C over 1 hour, and while maintaining the pressure of the reactor at 1 Torr (absolute pressure: 1 mmHg) or less, a condensation polymerization reaction was conducted. At the beginning of the condensation polymerization reaction, a stirring speed was set rapid, but if stirring force decreases or the temperature of the reactant increases over predetermined temperature due to viscosity increase of the reactant with the progression of the condensation polymerization reaction, the stirring speed may be appropriately controlled. The condensation polymerization reaction was progressed until intrinsic viscosity (IV) of the mixture (molten material) in the reactor became 0.70 dl/g. If the intrinsic viscosity of the mixture in the reactor reached a desired level, the mixture was discharged outside the reactor and stranded, and it was solidified with a coolant, and then, granulated such that the average weight became about 12 to 14 mg, thus preparing polyester copolymer.

In Examples and Comparative Examples, the contents of the components introduced for the preparation of polyester copolymer were shown in the following Table 1.

[Table 1]

| | r-BHET | Purity of r-BHET | TPA | IPA | DMT | EG | CHDM | DEG | CHDM derivatives | (Diol)/(A cid or derivates)1) |
|---|---|---|---|---|---|---|---|---|---|---|
| unit | mol | % | mol | mol | mol | mol | Mol | mol | Mol | - |
| Example 1 | 5.85 | 93 | 12.26 | 0 | 0 | 5.92 | 5.74 | 1.99 | 0 | 1.11 |
| Example 2 | 905 | 98 | 6.74 | 0 | 0 | 0.11 | 5.01 | 2.05 | 0 | 1.06 |

(continued)

| | r-BHET | Purity of r-BHET | TPA | IPA | DMT | EG | CHDM | DEG | CHDM derivatives | (Diol)/(Acid or derivates)1) |
|---|---|---|---|---|---|---|---|---|---|---|
| unit | mol | % | mol | mol | mol | mol | Mol | mol | Mol | - |
| Example 3 | 1.59 | 90 | 14.28 | 0 | 0 | 8.88 | 4.76 | 2.22 | 0 | 1.11 |
| Example 4 | 16.25 | 85 | 4.06 | 0 | 0 | 0 | 609 | 3.66 | 0 | 2.40 |
| Example 5 | 9.90 | 99 | 7.38 | 0 | 0 | 1.28 | 3.63 | 2.94 | 0 | 1.06 |
| Example 6 | 5.61 | 98 | 13.73 | 0 | 0 | 11.22 | 1.55 | 1.93 | 1.16 | 1.15 |
| Example 7 | 14.55 | 90 | 3.64 | 0 | 0 | 2.55 | 1.82 | 1.64 | 1.27 | 200 |
| Example 8 | 2.38 | 86 | 0 | 0 | 13.19 | 17.27 | 4.91 | 1.58 | 0 | 1.76 |
| Example 9 | 4.90 | 87 | 11.44 | 4.90 | 0 | 904 | 5.18 | 2.12 | 0 | 1.00 |
| Comparative Example 1 | 17.20 | 81 | 0.91 | 0 | 0 | 1.27 | 5.79 | 1.99 | 0 | 10.00 |
| Comparative Example 2 | 14.70 | 90 | 1.11 | 0 | 0 | 0 | 4.82 | 2.13 | 0 | 6.29 |
| Comparative Example 3 | 5.61 | 91 | 13.73 | 0 | 0 | 29.01 | 0.97 | 4.83 | 1.55 | 2.65 |
| Comparative Example 4 | 9.51 | 86 | 9.51 | 0 | 0 | 1.90 | 5.71 | 000 | 0 | 0.80 |
| Comparative Example 5 | 704 | 85 | 7.04 | 0 | 0 | 2.82 | 0 | 2.82 | 0 | 0.80 |
| Comparative Example 6 | 8.89 | 83 | 8.89 | 0 | 0 | 1.96 | 5.16 | 3.56 | 0 | 1.20 |
| 1) (Diol)/(Acid or derivates) = (EG + CHDM + DEG + CHDM derivatives) / (TPA + IPA + DMT) | | | | | | | | | | |

**Experimental Example**

For the copolymers prepared in Examples and Comparative Examples, the properties were evaluated as follows.

1) Purity of r-BHET

The purity of r-BHET was measured by diluting 0.01g of a sample in each 20 ml of methanol or chloroform, using liquid chromatography, and through the measured spectrum, a peak area was integrated and purity (area%) in the total BHET was confirmed.

2) Residue composition

A composition(wt%) derived from r-BHET and a composition(mol%) derived from diol in polyester resin were confirmed through 1H-NMR spectrum obtained at 25°C using nuclear magnetic resonance device (JEOL, 600MHz FT-NMR), after dissolving a sample in a $CDCl_3$ solvent at the concentration of 3 mg/mL. Wherein, the residue composition derived from diol was analyzed as the mol% of residues derived from each specific diol (DEG and CHDM) to the total composition of all residues derived from diol.

3) Intrinsic viscosity

Intrinsic viscosity was measured using Ubbelohde viscometer in a 35°C thermostat, after dissolving polyester copolymer in 150°C orthochlorophenol(OCP) at the concentration of 0.12%. Specifically, the temperature of the tube viscometer was maintained at 35°C, and a time $t_0$ (efflux time) taken for the solvent to pass between specific internal sections of the tube viscometer, and a time t taken for the solution to pass therebetween were calculated. And then, the $t_0$ value and t value were substituted into Equation 1 to calculate specific viscosity, and the specific viscosity value was substituted into Equation 2 to calculate intrinsic viscosity.

[Equation 1]

$$\eta_{sp} = \frac{t - t_0}{t_0}$$

[Equation 2]

$$[\eta] = \frac{\sqrt{1 + 4A\eta_{sp}} - 1}{2Ac}$$

4) Plaque color L-b

The chromacity and brightness of a sample were measured using Varin Cary 5 UV/Vis/NIR spectrophotometer equipped with a diffuse reflection part. A polyester resin specimen with a thickness of 6 mm was prepared, transmission data was obtained with Illuminant D65 at the observer angle of 2°, and it was treated using a color analyzer in Grams/32 software to calculate Hunter L*a*b* value, and L-b was described in the following Table.

5) Haze

A polyester resin specimen with a thickness of 6 mm was prepared, and Haze of the specimen was measured using CM-3600A measuring instrument (Minolta Inc.) according to ASTM D1003-97 method.

6) Shrinkage

The polyester resins prepared according to Examples and Comparative Examples were extruded through a die at a temperature of 250°C to 290°C, and then, cooled to 20°C to 50°C, thus preparing undrawn films. And then, while reheating the undrawn film to 75°C to 95°C, it was drawn 5 times in a transverse direction to prepare a polyester film. The thickness of the prepared polyester film was 45 um.
The prepared polyester film was cut into 5 cm x 5 cm square, and drawn while reheating at a draw ratio(DR) of MD:TD=1:5, and draw temperature of 75 to 95°C , and then, put in a hot water bath at a temperature described in the following Table 1 for 30 seconds to shrink, and then, the vertical length and horizontal length of the sample were measured to calculate shrinkage according to the following Equation.

- Heat shrinkage (%) = 100 × (length before shrink - length before shrink) / (lenght before shrink)

The above results were shown in the following Table 2.

[Table 2]

| | r-BHET | DEG | CHDM | (Diol)/(Acid or derivates ) | Intrinsic viscosity | Plaque Color L-b | Haze | 70°C shrinkage | 95°C shrinkage |
|---|---|---|---|---|---|---|---|---|---|
| Unit | wt% | mol% | mol% | - | dg/l | - | - | - | - |
| Example 1 | 29.6 | 8.0 | 31.0 | 1.11 | 0.70 | 88 | 1 | 38.2% | 700% |

(continued)

| | r-BHET | DEG | CHDM | (Diol)/(Acid or derivates ) | Intrinsic viscosity | Plaque Color L-b | Haze | 70°C shrinkage | 95°C shrinkage |
|---|---|---|---|---|---|---|---|---|---|
| Unit | wt% | mol% | mol% | - | dg/l | - | - | - | - |
| Example 2 | 49.0 | 9.5 | 31.0 | 1.06 | 0.70 | 87 | 1 | 450% | 78.0% |
| Example 3 | 100 | 11.0 | 29.0 | 1.11 | 0.70 | 90 | 1 | 38.2% | 78.0% |
| Example 4 | 61.8 | 13.0 | 29.0 | 2.40 | 0.70 | 87 | 1 | 450% | 770% |
| Example 5 | 51.6 | 13.0 | 20.0 | 1.06 | 0.70 | 85 | 1 | 440% | 720% |
| Example 6 | 29.5 | 11.5 | 14.5 | 1.15 | 0.65 | 85 | 1.5 | 32.7% | 700% |
| Example 7 | 70.1 | 11.5 | 14.5 | 2.00 | 0.80 | 82 | 0.8 | 27.2% | 750% |
| Example 8 | 127 | 8.0 | 31.0 | 1.50 | 0.70 | 85 | 3 | 32.7% | 750% |
| Example 9 | 41.0 | 13.0 | 20.0 | 1.00 | 0.70 | 85 | 3 | 450% | 720% |
| Comparative Example 1 | 71.7 | 8.0 | 31.0 | 10.00 | 0.70 | 80 | 4 | 460% | 750% |
| Comparative Example 2 | 70.6 | 13.0 | 29.0 | 6.29 | 0.70 | 80 | 4 | 58.8% | 750% |
| Comparative Example 3 | 23.8 | 11.5 | 14.5 | 2.65 | 0.65 | 80 | 1.5 | 520% | 650% |
| Comparative Example 4 | 47.2 | 0.0 | 30.0 | 0.80 | 0.60 | 75 | 10 | 9.4% | 550% |
| Comparative Example 5 | 51.6 | 25.0 | 0.0 | 0.80 | 0.70 | 70 | 1.5 | 65.0% | 750% |
| Comparative Example 6 | 43.5 | 11 | 29 | 1.2 | 0.70 | 70 | 4 | 500% | 750% |

As shown in Table 2, Examples 1 to 9 according to the invention exhibited excellent effects in terms of color property, Haze and shrinkage. To the contrary, in the case of Comparative Examples 1 and 2, since the content of a part derived from recycled r-BHET was high, color property and Haze were deteriorated, and in the case of Comparative Example 2, although the content of a part derived from r-BHET was within 70wt%, since diol/acid value was greater than 2.5, color property was deteriorated.

Further, since the heat shrink films prepared using the resins of Comparative Examples 1 to 3 have diol/acid values greater than 2.5, by-products and side reactions increased due to large amount of diol introduced, and thus, 70°C shrinkage was greater than 45%, and due to excessive shrinkage according to temperature, they cannot be applied for a commercial heat shrink film process. Further, in the case of Comparative Examples 4 and 5, since DEG and CHDM was not respectively used, color property and Haze were deteriorated. Further, in the case of Comparative Example 6, since the purity of r-BHET was low and the content of impurities exceeded a certain level, low temperature (70°C) shrinkage of the final product increased by impurities, and thus, it is difficult to apply for a commercial process.

Thus, it can be confirmed that in case the content of a part derived from r-BHET is 70wt% or less, and diol/acid value is 2.5 or less as in this invention, excellent effects may be exhibited in terms of color property, Haze and shrinkage.

**Claims**

1. Polyester copolymer polymerized from

   1) recycled bis-2-hydroxyethyl terephthalate,
   2) acid comprising dicarboxylic acid or derivatives thereof, and
   3) diol comprising diethylene glycol and comonomers, and
   having a structure in which a part derived from the bis-2-hydroxyethyl terephthalate, a part derived from the dicarboxylic acid or derivatives thereof, and a part derived from the diol are repeated,
   wherein the polyester copolymer comprises the part derived from the recycled bis-2-hydroxyethyl terephthalate in the content of 5 to 70 wt%, and
   the mole ratio of the diol, and the dicarboxylic acid or derivatives thereof is 1.0:1 to 2.5:1.

2. The polyester copolymer according to claim 1, wherein the comonomers are ethylene glycol, cyclohexanedimethanol, cyclohexanedimethanol derivatives, or a combination thereof.

3. The polyester copolymer according to claim 2, wherein the cyclohexanedimethanol derivative is 4-(hyroxymethyl)cyclohexylmethyl 4-(hydroxymethyl)cyclohexane carboxylate, or 4-(4-(hydroxymethyl)cyclohexylmethoxymethyl)cyclohexylmethanol.

4. The polyester copolymer according to claim 3, wherein the polyester resin comprises a diol part derived from 4-(hydroxymethyl)cyclohexylmethyl 4-(hydroxymethyl)cyclohexane carboxylate and 4-(4-(hydroxymethyl)cyclohexylmethoxymethyl)cyclohexylmethanol in the content of 0.1 to 25 mol%, based on the total diol part.

5. The polyester copolymer according to claim 1, wherein the comonomers further comprise 1,2-propanediol, 1,3-propanediol, 2-methyl-1,3-propanediol, 2-methylene-1,3-propanediol, 2-ethyl-1,3-propanediol, 2-isopropyl-1,3-propanediol, 2,2-dimethyl-1,3-propanediol, 1,4-butanediol, 2,3-butanediol, 3-methyl-1,5-pentanediol, 3-methyl-2,4-pentanediol, 1,6-hexanediol, 1,2-cyclohexanediol, 1,4-cyclohexanediol, diethylene glycol or a mixture thereof.

6. The polyester copolymer according to claim 1, wherein the acid comprising dicarboxylic acid or derivatives thereof comprises terephthalic acid.

7. The polyester copolymer according to claim 6, wherein the acid comprising dicarboxylic acid or derivatives thereof comprises one or more selected from the group consisting of isophthalic acid, dimethyl isophthalate, phthalic acid, dimethyl phthalate, phthalic anhydride, 2,6-naphthalene dicarboxylic acid, dimethyl 2,6-naphthalene dicarboxylate, diphenyl dicarboxylic acid, 1,4-cyclohexane dicarboxylic acid, 1,3-cyclohexane dicarboxylic acid, dimethyl 1,4-cyclohexane dicarboxylate, dimethyl 1,3-cyclohexane dicarboxylate, sebacic acid, succinic acid, isodecylsuccinic acid, maleic acid, maleic anhydride, fumaric acid, adipic acid, glutaric acid and azelaic acid.

8. The polyester copolymer according to claim 1, wherein the diethylene glycol residues are included in the content of 5 to 50 moles, based on 100 moles of the total diol component residues.

9. The polyester copolymer according to claim 1, wherein the recycled bis-2-hydroxyethyl terephthalate has a purity of 85% or more.

10. The polyester copolymer according to claim 1, wherein the polyester copolymer has intrinsic viscosity of 0.50 to 1.0 dl/g.

11. The polyester copolymer according to claim 1, wherein Haze of the polyester copolymer is 3 or less.

12. The polyester copolymer according to claim 1, wherein (Hunter L value)-(Hunter b value) of a specimen of the polyester copolymer with a thickness of 6 mm is 80 or more.

13. An article comprising the polyester copolymer according to any one of claims 1 to 12.

14. The article according to claim 13, wherein the article is a film.

15. The article according to claim 14, wherein the film has 70°C shrinkage of 45% or less.

**16.** The article according to claim 14, wherein the film has 95°C shrinkage of 70% or more.

## INTERNATIONAL SEARCH REPORT

| International application No. |
|---|
| **PCT/KR2022/007322** |

| A. | CLASSIFICATION OF SUBJECT MATTER |
|---|---|

**C08G 63/60**(2006.01)i; **C08J 5/18**(2006.01)i

According to International Patent Classification (IPC) or to both national classification and IPC

| B. | FIELDS SEARCHED |
|---|---|

Minimum documentation searched (classification system followed by classification symbols)

C08G 63/60(2006.01); B29C 55/04(2006.01); C07C 67/52(2006.01); C07C 69/82(2006.01); C08G 63/78(2006.01); C08G 63/80(2006.01); C08G 63/91(2006.01); C08J 11/10(2006.01); C08J 3/22(2006.01); C08L 67/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 재사용 비스-2-히드록시에틸테레프탈레이트(recycled bis-2-hydroxyethyl terephthalate, r-BHET), 디카르복실산(dicarboxylic acid), 디에틸렌 글리콜(diethylene glycol), 디올(diol), 몰비(molar ratio), 폴리에스테르 공중합체(polyester copolymer)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2020-0061948 A (LOTTE CHEMICAL CORPORATION) 03 June 2020 (2020-06-03)<br>See abstract; paragraphs [0017], [0036], [0037], [0040], [0044] and [0102]; claims 1 and 5-7; example 1; and table 2. | 1,2,5-13 |
| Y | | 3,4,14-16 |
| Y | KR 10-2021-0037267 A (SK CHEMICALS CO., LTD.) 06 April 2021 (2021-04-06)<br>See abstract; and claim 1. | 3,4 |
| Y | WO 2021-038512 A1 (KULKARNI, S. T.) 04 March 2021 (2021-03-04)<br>See abstract; and paragraph [0059]. | 14-16 |
| A | KR 10-2012-0133037 A (WOONGJIN CHEMICAL CO., LTD.) 10 December 2012 (2012-12-10)<br>See entire document. | 1-16 |

| ☑ | Further documents are listed in the continuation of Box C. | ☑ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 August 2022** | **24 August 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| | International application No. |
|---|---|
| | **PCT/KR2022/007322** |

**C.      DOCUMENTS CONSIDERED TO BE RELEVANT**

| Category* | Citation of document, with indication, where appropriate, of the relevant passages | Relevant to claim No. |
|---|---|---|
| A | KR 10-1430108 B1 (TORAY CHEMICAL KOREA INC.) 18 August 2014 (2014-08-18)<br>      See entire document. | 1-16 |

Form PCT/ISA/210 (second sheet) (July 2019)

**INTERNATIONAL SEARCH REPORT**
**Information on patent family members**

International application No.

**PCT/KR2022/007322**

| Patent document cited in search report | | | Publication date (day/month/year) | Patent family member(s) | | | Publication date (day/month/year) |
|---|---|---|---|---|---|---|---|
| KR | 10-2020-0061948 | A | 03 June 2020 | None | | | |
| KR | 10-2021-0037267 | A | 06 April 2021 | CN | 114514286 | A | 17 May 2022 |
| | | | | EP | 4036168 | A1 | 03 August 2022 |
| | | | | TW | 202116916 | A | 01 May 2021 |
| | | | | WO | 2021-060686 | A1 | 01 April 2021 |
| WO | 2021-038512 | A1 | 04 March 2021 | CN | 114599713 | A | 07 June 2022 |
| | | | | WO | 2021-038512 | A8 | 04 March 2021 |
| KR | 10-2012-0133037 | A | 10 December 2012 | KR | 10-1306581 | B1 | 11 September 2013 |
| KR | 10-1430108 | B1 | 18 August 2014 | KR | 10-2013-0120906 | A | 05 November 2013 |

Form PCT/ISA/210 (patent family annex) (July 2019)